# EUROPEAN PATENT SPECIFICATION

(11) **EP 4 248 084 B1**
(45) Date of publication and mention of the grant of the patent: **01.01.2025**
(21) Application number: 21815199.1
(22) Date of filing: 23.11.2021
(51) Int. Cl.: F03D 1/04, F03D 1/06, F03D 5/00, F03D 9/11, F03D 9/34

(54) **AXIAL FLOW WIND ENERGY CONVERTING APPARATUS AND SYSTEM THEREOF**
AXIALE STRÖMUNGSVORRICHTUNG ZUR UMWANDLUNG VON WINDENERGIE UND SYSTEM DAFÜR
APPAREIL À ÉCOULEMENT AXIAL POUR LA CONVERSION DE L'ÉNERGIE ÉOLIENNE ET SYSTÈME CORRESPONDANT

(30) Priority: 23.11.2020 NL 2026958
(43) Date of publication of application: 27.09.2023
(73) Proprietor: Tarantola, Carlo, 92137 Dubai (AE)
(72) Inventor: DE LUCA, Massimiliano, 66020 SAMBUCETO CH (IT)
(74) Representative: Arnold & Siedsma
(86) International application number: PCT/EP2021/082706
(87) International publication number: WO 2022/106729

(56) References cited:
- CA-A1- 2 893 119
- FR-A1- 3 091 559
- KR-B1- 101 929 676
- US-A1- 2007 252 391
- US-A1- 2014 133 965
- US-A1- 2015 021 917
- US-A1- 2017 194 835

## Description

### FIELD OF INVENTION

The field of invention relates to wind energy converting systems, and wind energy converting apparatuses. Particular embodiments relate to bladeless apparatuses and systems thereof for air inlets or air outlets.

### BACKGROUND

In the past years, considerable attention has been given to renewable forms of energy. Such renewable energy sources include biomass conversion systems, passive and active solar energy devices, and wind energy driven systems. Among those, wind power as a source of energy is arguably the most promising since it is not dependent on the presence of light like for solar-based devices and since wind energy driven systems are amongst the most cost-effective due to the existence of technologies for capturing wind since centuries. However, wind sources which are exploited are generally naturally occurring wind flows. And natural wind flows can be wildly varying in intensity, direction, and frequency.

In prior art solutions, air flow generated in man-made constructs, *e.g.* air vents of buildings, has been used to generate energy via the utilization of bladed propellers. However, the design of bladed propellers is complex and requires a high precision assembly in order to operate as intended. Relevant background art is disclosed in US 2014/133965 A1 and US 2015/021917 A1.

### SUMMARY

The object of embodiments of the invention is to provide a wind energy converting apparatus and system thereof allowing for a simpler design and manufacturing approach, while still being adapted to the type of air flows encountered in man-made constructs.

According to a first aspect of the invention, there is provided a wind energy converting system. The wind energy converting systems comprises an air flow generating means and a wind converting apparatus. The airflow generating means comprises at least one air inlet and at least one air outlet. The wind converting apparatus is for the at least one air inlet or the at least one air outlet, preferably for the at least one air outlet. The wind converting apparatus comprises a sleeve, a helical propeller body, and an alternator. The sleeve is configured for being arranged over one of the at least one air inlet or one of the at least one air outlet. The sleeve comprises a first opening placed around the one of the at least one air inlet or the one of the at least one air outlet and a second opening opposite thereof. The helical propeller body is rotatably arranged within the sleeve such that air circulating within the sleeve induces a rotation of the helical propeller body. A rotation axis of the helical propeller body substantially corresponds to an axis of a corresponding sleeve portion. The helical propeller body comprises at least one complete helix turn. An outer diameter of the helical propeller body is gradually increasing as seen in a direction of the air circulation from a first extremity of the helical propeller body facing the direction of the air circulation.

The alternator is connected to the helical propeller body and is configured for converting the rotation of the helical propeller body into electricity.

The present invention relies on the principle of recuperating energy from the airflow generating means by converting wind energy from the airflow generating means into electricity. In general, the airflow generating means may induce wind energy during its activity. Depending on the type of the airflow generating means, its main usage may be the compression of air, the injection of air, the extraction of air, the cooling or heating of air, the renewal of air contained in an enclosure, etc. To do so, the airflow generating means includes at least one air inlet and at least one air outlet. Typically, the airflow generating means may generate an inflow or an outflow of air from the outside to an enclosure, such as a building, or vice versa.

The recuperation of wind energy may occur at the at least one air inlet or at the least one air outlet, preferably at the at least one air outlet. Originating from the at least one air inlet or the at least one air outlet, the airflow may present a laminar flow. Due to the type of airflow and the fact that the at least one air inlet or the at least one air outlet is fixed in position, the source of wind energy of the airflow generating means has the advantage of being stable, predictable, as well as allowing an easy capture of the wind.

Capture of the wind is achieved by the helical propeller body. In one embodiment, the helical propeller body may be manufactured in one piece. In another embodiment, there may be more than one helical propeller body. By using the helical propeller body instead of a bladed propeller, the overall design of the propeller is rendered simpler since the design of the helical propeller body relies on less geometrical parameters. This, in turn, allows for a more cost-efficient approach of the manufacturing process since the helical propeller body may comprise fewer parts than a bladed propeller. It is also making the helical propeller body more robust and less prone to positioning mistakes during assembly. Additionally, due to the larger continuous surface presented against the wind, the helical propeller body may be advantageously used for a more efficient conversion of wind having a laminar airflow, into rotation of the helical propeller body.

Using the helical propeller body brings additional advantages in terms of lateral compactness. Also, compared to the bladed propeller, the helical propeller body may generate rotation with a higher torque; thereby reducing a number of gear elements needed as part of the connection with the alternator.

Wind is being directed to the helical propeller body by the sleeve. In an embodiment, the portion of the sleeve arranged over the at least one air outlet or the at least one air inlet has an inner section similar in shape to an inner section of the at least one air inlet or the at least one air outlet. The axis of a sleeve portion, corresponding to a position of the helical propeller body, and the rotation axis of the helical propeller are coaxial. Indeed, the purpose of the sleeve is to conduct the wind getting in the at least one air inlet or the at least one air outlet and to force at least a portion of this wind to pass through the helical propeller body. In an embodiment, the sleeve is made of a rigid material.

The skilled person will understand that rotation of the helical propeller body within the sleeve may be achieved in various manners which may include bearings, for example, to reduce friction, and by having the helical propeller body being shaftless or arranged on a shaft.

Finally, the alternator will convert the rotation of the helical propeller body into electricity. The skilled person will be aware of the many technological solutions available to convert a mechanical rotation into electricity.

According to the invention, an outer diameter of the helical propeller body is gradually increasing as seen in a direction of the air circulation.

In this manner, the wind can be gradually guided by the helical propeller body and the pressure of the wind against the helical propeller body can be increased to improve the conversion efficiency of wind energy into mechanical rotation. In an embodiment, after the increase of the outer diameter, the helical propeller body may comprise a portion with a constant outer diameter. In another embodiment, the outer diameter of the helical propeller body may gradually decrease in the direction of the air circulation at its other extremity; thereby increasing the airflow velocity and further enhancing the conversion efficiency of the helical propeller body.

According to an exemplary embodiment, an outer diameter of at least one portion of the helical propeller body closely matches an inner diameter of a corresponding portion of the sleeve.

In this way, the sleeve can force the majority of the wind generated by the airflow generating means to go through the helical propeller body. The outer footprint of the helical propeller body and the inner section of the corresponding portion of the sleeve may be of similar shapes or different shapes, preferably of similar shapes, more preferably both of circular shapes. The outer footprint may occupy over 60%, preferably over 70%, more preferably over 80%, most preferably over 90% of the inner section of the corresponding portion of the sleeve.

According to a preferred embodiment, the sleeve comprises a substantially conical portion configured for funneling the air circulation to the helical propeller body.

In this manner, the air pressure and/or the air velocity of the wind going against the helical propeller body may be increased. The conical portion may also be used to more precisely direct the wind towards the helical propeller body. Also, additional freedom is given to the design of the helical propeller body with respect to its outer diameter since the inner diameter of the sleeve at the level of the helical propeller body can be adapted by the proper dimensioning of the conical portion.

According to an exemplary embodiment, the wind converting apparatus further comprises a shaft rotatably arranged within the sleeve and connected to the alternator. The helical propeller body is fixed around the shaft.

In this way, the mechanical rotation of the helical propeller body may be more easily and directly coupled to the alternator. The helical propeller body and the shaft may be in the same material or in different materials. The helical propeller body may be fixed around the shaft by gluing, soldering, and/or via fastening means, e.g. rivet, screw, nut and bolt. The shaft may be rotatably arranged within the sleeve via one or more rotation-enabled connections with the sleeve. In an embodiment, the one or more rotation-enabled connections may comprise friction reducing means, e.g. bearings, magnetic elements, to reduce mechanical rotation losses due to friction between the shaft and the one or more rotation-enabled connections.

According to a preferred embodiment, the wind converting apparatus further comprises a hub configured for releasably connecting the shaft to the alternator.

In this manner, a maintenance or a servicing operation on the system may be made simpler by the releasable connection of different parts of the hub. In an embodiment, the hub may comprise a first geared part fixed to the shaft, and a second geared part fixed to the alternator, said first and second geared parts being configured for interengaging with each other and transmitting the mechanical rotation of the shaft to the alternator via the hub. In another embodiment, the hub may comprise magnetic parts and the transmission of the shaft mechanical rotation may be achieved through magnetic forces.

According to an exemplary embodiment, the wind converting apparatus further comprises a mechanical energy storing means provided between the hub and the alternator.

Preferably, the mechanical energy storing means comprises a flywheel, *e.g.* a variable inertia flywheel, arranged on a rotation axis between the hub and the alternator.

In this way, rotation of the shaft induced by wind may be stored as kinetic energy in the mechanical energy storing means. The mechanical energy storing means may help in regulating sudden modulations in intensities of the wind energy over time and/or mechanical constraints, such as an applied load, originating from the alternator during its use. The kinetic energy stored in the mechanical energy storing means may be transferred to the alternator and converted to electric energy even when no wind is present.

In an embodiment, the mechanical energy storing means comprises a variable inertia flywheel. This is advantageous for eliminating the need for a continuously variable transmission, for example, between the flywheel and the alternator.

According to an exemplary embodiment, the sleeve portion corresponding to the helical propeller body is defined by a substantially circular inner cross-section.

In this way, the airflow of the wind within the sleeve may be subject to less turbulence due to the circular geometry; which in turn makes it easier to design an efficient helical propeller body.

According to a preferred embodiment, the helical propeller body comprises at least three complete helix turns, preferably at least five complete helix turns.

In this manner, the wind energy may be more completely harvested by the helical propeller body.

According to an exemplary embodiment, the helical propeller body is made of plastic or metal, preferably aluminum.

In this way, the helical propeller body can be made in a relatively light material while retaining rigidity, which can decrease some losses in the wind energy conversion to mechanical rotation.

According to a preferred embodiment, the wind energy converting system further comprises an electricity storage means. The alternator is connected to the electricity storage means for storing the converted electricity.

In this manner, by being stored, the electricity produced via the system may be utilized in a more flexible manner.

According to an exemplary embodiment, the airflow generating means comprises at least one of: an air-conditioning unit, a fan, an air-extracting unit, an air compressing unit, an air refrigerating unit.

In this way, the overall energy efficiency of the airflow generating means may be improved by the addition of the wind converting apparatus by recuperating part of the generated energy under the guise of wind energy.

It is to be noted that the wind converting apparatus may also comprise a controlling means. The controlling means may control the storage and usage of electricity produced by the system. In addition, the airflow generating means may also comprise a controlling means, and the controlling means of the wind converting apparatus may be connected to the controlling means of the airflow generating means, and may be configured for controlling an operation of the wind converting apparatus to coincide with an activity of the airflow generating means.

By taking into account the activity of the airflow generating means, electronically controllable parameters of the wind converting apparatus may be altered in order to improve the wind energy harvesting and the electricity production of the system.

According to a preferred embodiment, the at least one air inlet comprises at least two air inlets or the at least one air outlet comprises at least two air outlets. The sleeve is configured for being arranged over more than one of the at least one air inlet or the at least one air outlet

In this manner, more wind energy may be directed towards the helical propeller body. It is to be noted that, generally, the multiple air inlets or air outlets of the airflow generating means may be located adjacent to each other.

According to an exemplary embodiment, a pitch of the helical propeller body is gradually increasing as seen in a direction of the air circulation.

In this way, the air pressure and/or the air velocity of the wind going against the helical propeller body may be gradually increased to improve the conversion efficiency of wind energy into mechanical rotation. In an embodiment, after the increase of the pitch, the helical propeller body may comprise a portion with a constant pitch. In another embodiment, the pitch of the helical propeller body may gradually decrease in the direction of the air circulation at its other extremity; thereby increasing the airflow velocity and further enhancing the conversion efficiency of the helical propeller body.

According to a preferred embodiment, the helical propeller body comprises at least two intertwined helices.

In this manner, an additional freedom is given in designing the helical propeller body is available. The helical propeller body may be made more efficient in converting the wind energy.

Note that aside from the pitch, the outer diameter, the presence of a shaft, and/or the number of intertwined helices, an asymptotic angle of the at least one helix turn or an overall section profile of the at least one helix turn may be altered and designed in order to obtained a desired helical propeller body.

The skilled person will understand that the hereinabove described technical considerations and advantages for wind energy converting system embodiments also apply to the below described corresponding wind converting apparatus embodiments, *mutatis mutandis.*

According to a second aspect of the invention, there is provided a wind converting apparatus for at least one of an air inlet or at least one air outlet, preferably for the at least one air outlet. The wind converting apparatus comprises a sleeve, a helical propeller body, and an alternator. The sleeve is configured for being arranged over one of the at least one air inlet or one of the at least one air outlet. The sleeve comprises a first opening placed around the one of the at least one air inlet or the one of the at least one air outlet and a second opening opposite thereof. The helical propeller body is rotatably arranged within the sleeve such that air circulating within the sleeve induces a rotation of the helical propeller body. A rotation axis of the helical propeller body substantially corresponds to an axis of a corresponding sleeve portion. The helical propeller body comprises at least one complete helix turn. The alternator is connected to the helical propeller body and configured for converting the rotation of the helical propeller body into electricity.

### BRIEF DESCRIPTION OF THE FIGURES

This and other aspects of the present invention will now be described in more detail, with reference to the appended drawings showing a currently preferred embodiment. Like numbers refer to like features throughout the drawings.
Figure 1 shows a side view of an exemplary embodiment of a wind energy converting system;
Figure 2 shows a close-up view from the side of another exemplary embodiment of a wind energy converting system;
Figures 3B and 3C depict various exemplary embodiments of a helical propeller body according to the invention. Figures 3A, 3D and 3E show examples which are not part of the invention.

### DESCRIPTION OF EMBODIMENT

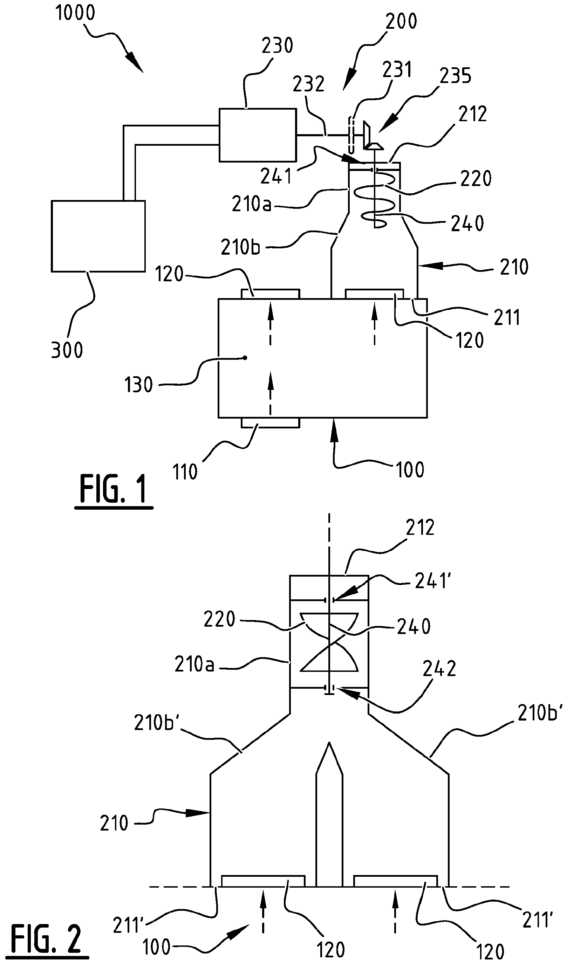

Figure 1 shows a side view of an exemplary embodiment of a wind energy converting system according to the present invention. The wind energy converting system 1000 comprises an airflow generating means 100, and a wind converting apparatus 200.

The airflow generating means 100 comprises at least one air inlet 110 and at least one air outlet 120. The number of air inlets 110 and the number of air outlets 120 may be similar or different. The dimensions and shapes of the air inlets 110 and of the air outlets 120 may be similar or different. Typically, there are a corresponding number of air inlets 110 and air outlets 120 and they are of circular shape. In the embodiment of Figure 1, the airflow generating means 100 comprises one air inlet 110 and two air outlets 120.

The airflow generating means 100 may comprise at least one of: an air-conditioning unit, a fan, an air-extracting unit, an air compressing unit, an air refrigerating unit. Depending on the type of the airflow generating means 100, its main usage may be the compression of air, the injection of air, the extraction of air, the cooling or heating of air, the renewal of air contained in an enclosure, etc. The airflow generating means 100 may be provided to an enclosure 130, *e.g.* a building, a shipping container, a warehouse, a room, and the at least one air inlet 110 and the at least one air outlet 120 may be arranged at different parts of the enclosure 130. Generally, in the case of a building, the at least one air outlet 120 may be arranged on the building roof. In an embodiment, the airflow generating means 100 may include a controlling means (not shown) for controlling an activity of the airflow generating means 100. The controlling means may control the intensity, duration, and timing of the activity of the airflow generating means 100.

The wind converting apparatus 200 is for the at least one air inlet 110 or the at least one air outlet 120. The wind converting apparatus 200 comprises a sleeve 210, a helical propeller body 220, and an alternator 230. The helical propeller body 220 comprises at least one complete helix turn. In other embodiments, the helical propeller body 220 may comprise at least three complete helix turns, preferably at least five complete helix turns.

The helical propeller body 220 may be positioned upstream or downstream of the at least one air inlet 110 or the at least one air outlet 120. In the embodiment of Figure 1, the helical propeller body 220 is positioned downstream of one of the at least one air outlet 120. The helical propeller body 220 is rotatably arranged within the sleeve 210 such that air circulating within the sleeve 210 induces a rotation of the helical propeller body 220. Mechanical arrangement of the helical propeller body 220 with respect to the sleeve 210 may differ depending whether the helical propeller body 220 is shaftless or fixed around a shaft 240, fixed around the shaft 240 in Figure 1. Although the embodiment of Figure 1 pertains to a downstream-positioned helical propeller body relative to an air outlet, the skilled person will understand how to adapt the different features described with respect to Figure 1 in other cases including different upstream or downstream positioning relative to at least one air inlet or at least one air outlet.

The helical propeller body 220 and the shaft 240 may be in the same material or in different materials. The helical propeller body 220 may be made of plastic or metal, preferably aluminum. The helical propeller body 220 may be fixed around the shaft 240 by gluing, soldering, and/or via fastening means, e.g. rivet, screw, nut and bolt. The shaft 240 may be rotatably arranged within the sleeve via one or more rotation-enabled connections 241 with the sleeve.

In the embodiment of Figure 1, the shaft 240 goes through one rotation-enabled connection 241. The rotation-enabled connection 241 may be connected to an inner surface of the sleeve 210, by connecting one or more connecting arms for example. The rotation-enabled connection 241 may be configured for positioning the shaft 240 at a central position of a corresponding inner section of the sleeve 210. The rotation-enabled connection 241 may be adjacent to an extremity of the helical propeller body 220. Preferably, the shaft 240 may go through at least two rotation-enabled connections each located at an extremity of the helical propeller body 220. In addition, the one or more rotation-enabled connections 241 may comprise friction reducing means, e.g. bearings, magnetic elements, to reduce mechanical rotation losses due to friction between the shaft 240 and the one or more rotation-enabled connections 241.

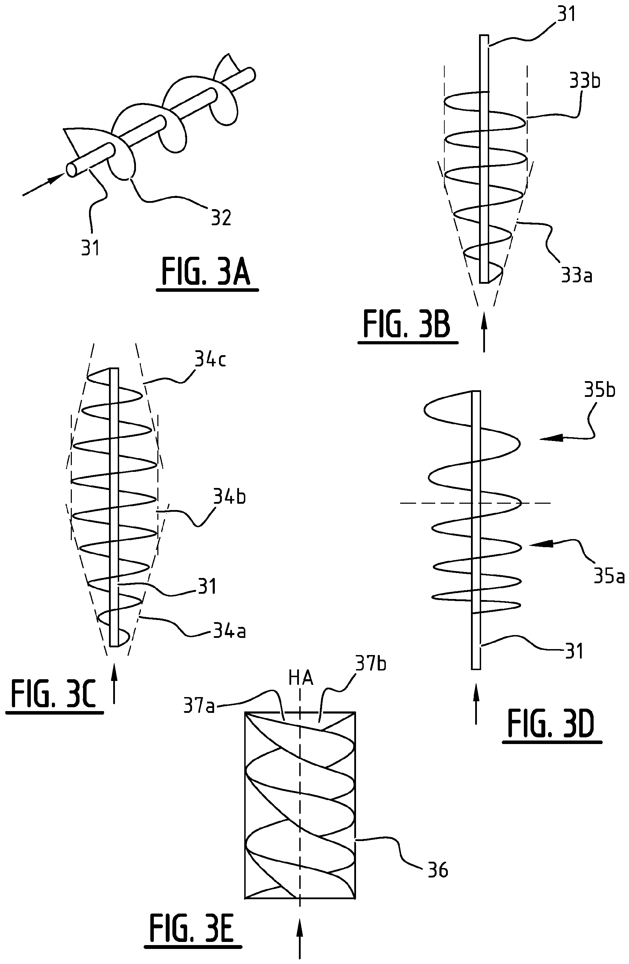

The geometry of the helical propeller body 220 may depend on a number of parameters. In the embodiment of Figure 1, an outer diameter of the helical propeller body 220 is gradually increasing as seen in a direction of the air circulation. The helical propeller body 220 may thereafter comprise a portion with a constant outer diameter. The helical propeller body 220 of Figure 1 has a constant pitch. Nonetheless it is to be noted that, aside from the pitch, the outer diameter, the presence of a shaft, and/or the number of intertwined helices, an asymptotic angle of the at least one helix turn or an overall section profile of the at least one helix turn may be altered and designed in order to obtained a desired helical propeller body. More detailed embodiments of helical propeller bodies will be described below with respect to Figures 3A-3D.

The sleeve 210 is configured for being arranged over one of the at least one air inlet 110 or one of the at least one air outlet 120, over one air outlet in Figure 1. The sleeve 210 comprises a first opening 211 placed around the one of the at least one air inlet 110 or the one of the at least one air outlet 120, and comprises a second opening 212 opposite the first opening 211. The sleeve 210 is preferably made of a rigid material. Additionally, the sleeve 211 may be straight, *i.e.* with the first opening 211 and the second opening 212 facing each other, or may comprise turns. The helical propeller body 220 may be arranged closer to the second opening 212 than to the first opening 211.

The first opening 211 and the second opening 212 may have similar or different shapes, and may be similar or different dimensions. Typically, the second opening 212 may have an inner cylindrical shape. The sleeve 210 may comprise a substantially conical portion 210b configured for funneling the air circulation to the helical propeller body 220, *i.e.* the substantially conical portion 210b is located upstream of the helical propeller body 220. By substantially conical portion 210b, it is meant a funnel-like portion with a decreasing section from one of its extremities to the other one. The decreasing section may change in shape from one extremity to the other one or may keep a corresponding shape.

Following the substantially conical portion 210b, the sleeve may comprise a corresponding sleeve portion 210a to helical propeller body 220. By corresponding sleeve portion 210a, it is meant a substantially straight portion of the sleeve 220 whose main axis substantially corresponds to a rotation axis of the helical propeller body 220. The helical propeller body 220 may be at least partially within the corresponding sleeve portion 210a. In an embodiment, the helical propeller body 220 may be entirely within the corresponding sleeve portion 210a. Depending on embodiment, the main axis of the corresponding sleeve portion 210a may be parallel or at an angle, preferably parallel, with respect to an air circulation direction within the sleeve 210.

The outer footprint of the helical propeller body 220 and the inner cross-section of the corresponding sleeve portion 210a may be of similar shapes or different shapes, preferably of similar shapes, more preferably both of circular shapes. The outer footprint may occupy over 60%, preferably over 70%, more preferably over 80%, most preferably over 90% of the inner cross-section of the corresponding sleeve portion 210a. In the embodiment of Figure 1, the outer footprint of the helical propeller body 220 closely match the inner cross-section of the corresponding sleeve portion 210a.

The alternator 230 is connected to the helical propeller body 220 and is configured for converting the rotation of the helical propeller body 220 into electricity. For example, the shaft 240 may be connected directly to the alternator 230. In another embodiment, the shaft 240 may be connected to the alternator 230 via a gear box (not shown) in order to increase or decrease the torque and/or the velocity or a rotary force input to the alternator 230.

The wind converting apparatus 200 may further comprise a hub 235 configured for releasably connecting the shaft 240 to the alternator 230. In the embodiment of Figure 1, the hub 235 may comprise a first geared part fixed to the shaft 240, and a second geared part fixed to the alternator 230, said first and second geared parts being configured for interengaging with each other and transmitting the mechanical rotation of the shaft 240 to the alternator 230 via the hub 235. In another embodiment, the hub 235 may comprise magnetic parts and the transmission of the shaft mechanical rotation may be achieved through magnetic forces.

Optionally, the wind energy converting apparatus 1000 further comprises a mechanical energy storing means 231 provided between the hub 235 and the alternator 240. In the embodiment of Figure 1, the hub 235 and the alternator 240 are connected by a rotation axis 232. The mechanical energy storing means 231 comprises a flywheel, *e.g.* a variable inertia flywheel, arranged on the rotation axis 232. Thanks to the mechanical energy storing means 231, sudden modulations in intensities of the wind energy, which is typically the case for mechanical ventilation systems included in the airflow generating means 100, can be regulated. Also, variations in a load applied by the alternator 240 to the rotation axis 232 may be regulated by the mechanical energy storing means 231.

The wind energy converting system 1000 may further comprise an electricity storage means 300. The alternator 230 of Figure 1 is connected to the electricity storage means 300 for storing the converted electricity. In addition, the wind converting apparatus 200 may also comprise a controlling means (not shown). The controlling means of the wind converting apparatus 200 may control the storage and usage of electricity produced by the system 1000. Also, the airflow generating means 100 may comprise a controlling means, and the controlling means of the wind converting apparatus 200 may be connected to the controlling means of the airflow generating means 100, and may be configured for controlling an operation of the wind converting apparatus 200 to coincide with an activity of the airflow generating means 100. By taking into account the activity of the airflow generating means 200, electronically controllable parameters of the wind converting apparatus 100 may be altered in order to improve the wind energy harvesting and the electricity production of the system 1000.

Figure 2 shows a close-up view from the side of another exemplary embodiment of a wind energy converting system according to the present invention. The wind energy converting system 1000 comprises an airflow generating means 100, and a wind converting apparatus 200. The airflow generating means 100 of Figure 2 may be similar to the one described with respect to Figure 1.

In the embodiment of Figure 2, the wind converting apparatus 200 is for the at least one air outlet 120. The wind converting apparatus 200 comprises a sleeve 210, a helical propeller body 220, and an alternator 230. The helical propeller body 220 comprises at least one complete helix turn, exactly one complete helix turn in Figure 2, and is positioned downstream of one of the at least one air outlet 120. The helical propeller body 220 is rotatably arranged within the sleeve 210 such that air circulating within the sleeve 210 induces a rotation of the helical propeller body 220, and is fixed around a shaft 240.

The helical propeller body 220 and the shaft 240 may be in the same material or in different materials. The helical propeller body 220 may be made of plastic or metal, preferably aluminum. The helical propeller body 220 may be fixed around the shaft 240 by gluing, soldering, and/or via fastening means, e.g. rivet, screw, nut and bolt. The shaft 240 may be rotatably arranged within the sleeve 210 via one or more rotation-enabled connections 241.

In the embodiment of Figure 2, the shaft 240 goes through two rotation-enabled connections 241', 242. The rotation-enabled connections 241', 242 may be connected to an inner surface of the sleeve 210, by connecting one or more connecting arms for example. The rotation-enabled connections 241', 242 may be configured for positioning the shaft 240 at a central position of a corresponding inner section of the sleeve 210. The shaft 240 may go through the two rotation-enabled connections 241', 242 each located at an extremity of the helical propeller body 220. In addition, the one or more rotation-enabled connections 241', 242 may comprise friction reducing means, e.g. bearings, magnetic elements, to reduce mechanical rotation losses due to friction between the shaft 240 and the one or more rotation-enabled connections 241. The helical propeller body 220 of Figure 2 has a constant outer diameter and a constant pitch.

The sleeve 210 of Figure 2 is configured for being arranged over all the air outlets 120 of the airflow generating means, *i.e.* over two adjacent air outlets 120. The sleeve 210 comprises two lower branches with each of the lower branches comprising a first opening 211' placed around one of the two air outlets 120. The two lower branches of the sleeve 210 converge in a Y-design towards a single corresponding sleeve portion 210a. The corresponding sleeve portion 210a ends with a second opening 212 opposite the two first openings 211'. The sleeve 210 is preferably made of a rigid material. The helical propeller body 220 may be arranged closer to the second opening 212 than to the two first openings 211'.

The first openings 211' and the second opening 212 may have similar or different shapes, and may be similar or different dimensions. The sleeve 210 may comprise a substantially conical portion 210b' for each of its lower branches, each of the substantially conical portions 210b' tapering towards the corresponding sleeve portion 210a. The two substantially conical portions 210b' may have decreasing cross-sections with a change in shape from one extremity to the other one or may keep a corresponding shape.

In the embodiment of Figure 2, the helical propeller body 220 is entirely within the corresponding sleeve portion 210a. The main axis of the corresponding sleeve portion 210a may be parallel with respect to an air circulation direction coming out of the two air outlets 120. In an alternative embodiment, instead of two lower branches, the sleeve 210 may comprise a single first opening surrounding the two air outlets 120 and connected to the corresponding sleeve portion 210a.

The outer footprint of the helical propeller body 220 and the inner cross-section of the corresponding sleeve portion 210a may be of similar shapes, preferably both of circular shapes. In the embodiment of Figure 2, the outer footprint of the helical propeller body 220 closely matches the inner cross-section of the corresponding sleeve portion 210a. The shaft 240 of the wind energy converting apparatus is connected to an alternator (not shown) for converting the rotation of the helical propeller body 220 into electricity.

Figures 3B and 3C depict various exemplary embodiments of a helical propeller body according to the present invention. An arrow in each of the figures illustrates a preferred direction of air circulation when using the helical propeller body in a wind energy converting apparatus as defined in the present invention.

Figure 3A shows a perspective view of a helical propeller body 32. The helical propeller body 32 is fixed to a shaft 31. The helical propeller body 32 comprises three complete helix turns and has a constant pitch. An outer diameter of the helical propeller body 32 remains constant over the entire length of the helical propeller body 32.

Figure 3B shows a cut side-view of a helical propeller body 33a, 33b fixed to a shaft 31. The helical propeller body 33a, 33b comprises five complete helix turns and has a constant pitch. The helical propeller body comprises a first portion 33a and a second portion 33b. In the first portion 33a, an outer diameter of the helical propeller body increases gradually as seen in the air circulation direction. In the second portion 33b, the outer diameter of the helical propeller body remains constant.

Figure 3C shows a cut side-view of a helical propeller body 34a, 34b, 34c fixed to a shaft 31. The helical propeller body 34a, 34b, 34c comprises eight complete helix turns and has a constant pitch. The helical propeller body comprises a first portion 34a, a second portion 34b, and a third portion 34c. In the first portion 34a, an outer diameter of the helical propeller body increases gradually as seen in the air circulation direction. In the second portion 34b, the outer diameter of the helical propeller body remains constant. In the third portion 34c, the outer diameter of the helical propeller body decreases gradually as seen in the air circulation direction. The rate of the dimension increase in the first portion 34a may be similar or different than the rate of the dimension decrease in the third portion 34c.

Figure 3D shows a cut side-view of a helical propeller body 35a, 35b fixed to a shaft 31. The helical propeller body 35a, 35b comprises five complete helix turns. An outer diameter of the helical propeller body 35a, 35b remains constant over the entire length of the helical propeller body 35a, 35b. The helical propeller body comprises a first portion 35a and a second portion 35b. In the first portion 35a, a pitch of the helical propeller body increases gradually as seen in the air circulation direction. This gradual increase of the pitch may help in facilitating the air flow between a first opening and a second opening of a sleeve (not shown) of the wind energy converting apparatus by creating a Venturi effect; strain caused by the presence of the helical propeller body 35a, 35b to an airflow generating means is therefore reduced. Additionally, sudden variations in intensities of the wind energy, which is typically the case for mechanical ventilation systems included in an airflow generating means, can be better taken advantage of in initiating a motion of the helical propeller body 35a, 35b due to the higher initial attack angle of the helical propeller body 35a, 35b. Overall conversion of wind energy via the helical propeller body 35a, 35b is thus improved. In the second portion 35b, the pitch of the helical propeller body remains constant.

Figure 3E shows a side-view of a helical propeller body 37a, 37b fixed to an outer frame 36, *i.e.* the helical propeller body is shaftless. In another embodiment, the helical propeller body 37a, 37b is fixed within a hollow cylinder instead of the outer frame 36. The helical propeller body comprises a first 37a and a second 37b intertwined helices rotating around a single main axis HA. The two intertwined helices 37a, 37b are arranged at 180° of one with respect to the other. Each of the two intertwined helices 37a, 37b has a constant diameter and a constant pitch over the length of the helical propeller body. Each of the two intertwined helices 37a, 37b describes one and a half helix turns.

The skilled person will understand that many structural parameters of the helical propeller body may be varied in order to obtain a desired helical propeller body and that the embodiments described above with respect to Figures 3B and 3C are not limitative. For example, aside from the pitch, the outer diameter, the presence of a shaft, and/or the number of intertwined helices, an asymptotic angle of the at least one helix turn or an overall section profile of the at least one helix turn may be altered and designed in order to obtained a desired helical propeller body.

Whilst the principles of the invention have been set out above in connection with specific embodiments, it is to be understood that this description is merely made by way of example and not as a limitation of the scope of protection which is determined by the appended claims.

## Claims

1. A wind energy converting system (1000), comprising:
- an airflow generating means (100) comprising at least one air inlet (110) and at least one air outlet (120);
- a wind converting apparatus (200) for the at least one air inlet (110) or the at least one air outlet (120), preferably for the at least one air outlet (120), said wind converting apparatus (200) comprising:
- a sleeve (210) configured for being arranged over one of the at least one air inlet (110) or one of the at least one air outlet (120), said sleeve (210) comprising a first opening (211) placed around the one of the at least one air inlet (110) or the one of the at least one air outlet (120) and a second opening (212) opposite thereof;
- a helical propeller body (220) rotatably arranged within the sleeve (210) such that air circulating within the sleeve (210) induces a rotation of the helical propeller body (220);
- wherein a rotation axis of the helical propeller body (220) substantially corresponds to an axis of a corresponding sleeve portion (210a);
- **characterized in that** the helical propeller body (220) comprises at least one complete helix turn;
- wherein an outer diameter of the helical propeller body (220) is gradually increasing as seen in a direction of the air circulation from a first extremity of the helical propeller body facing the direction of the air circulation; and
- an alternator (230) connected to the helical propeller body (220) and configured for converting the rotation of the helical propeller body into electricity.

2. The system according to claim 1, wherein an outer diameter of the helical propeller body (220) is gradually decreasing as seen in the direction of the air circulation to a second extremity of the helical propeller body opposite the first extremity.

3. The system according to claim 1 or 2, wherein an outer diameter of at least one portion of the helical propeller body (220) closely matches an inner diameter of a corresponding portion of the sleeve (210).

4. The system according to any one of the previous claims, wherein the sleeve (210) comprises a substantially conical portion (210b) configured for funneling the air circulation to the helical propeller body (220).

5. The system according to any one of the previous claims, wherein the wind converting apparatus (200) further comprises a shaft (240) rotatably arranged within the sleeve (210) and connected to the alternator (230), and wherein the helical propeller body (220) is fixed around the shaft (240).

6. The system according to claim 5, wherein the wind converting apparatus (200) further comprises a hub (235) configured for releasably connecting the shaft (240) to the alternator (230).

7. The system according to claim 6, wherein the wind converting apparatus (200) further comprises a mechanical energy storing means (231) provided between the hub (235) and the alternator (240).

8. The system according to claim 7, wherein the mechanical energy storing means (231) comprises a flywheel, preferably a variable inertia flywheel, arranged on a rotation axis (232) between the hub (235) and the alternator (240).

9. The system according to any one of the previous claims, wherein the sleeve portion (210a) corresponding to the helical propeller body (220) is defined by a substantially circular inner cross-section.

10. The system according to any one of the previous claims, wherein the helical propeller body (220) comprises at least three complete helix turns, preferably at least five complete helix turns.

11. The system according to any one of the previous claims, wherein the helical propeller body (220) is made of plastic or metal, preferably aluminum.

12. The system according to any one of the previous claims, further comprising an electricity storage means (300), and wherein the alternator (230) is connected to the electricity storage means (300) for storing the converted electricity.

13. The system according to any one of the previous claims, wherein the airflow generating means (100) comprises at least one of: an air-conditioning unit, a fan, an air-extracting unit, an air compressing unit, an air refrigerating unit.

14. The system according to any one of the previous claims, wherein the at least one air inlet comprises at least two air inlets or the at least one air outlet comprises at least two air outlets, and wherein the sleeve (210) is configured for being arranged over more than one of the at least one air inlet (110) or the at least one air outlet (120).

15. The system according to any one of the previous claims, wherein a pitch of the helical propeller body (220) is gradually increasing as seen in a direction of the air circulation.

16. The system according to any one of the previous claims, wherein the helical propeller body (220) comprises at least two intertwined helices.

17. A wind converting apparatus for at least one of an air inlet or at least one air outlet, preferably for the at least one air outlet, comprising:
- a sleeve configured for being arranged over one of the at least one air inlet or one of the at least one air outlet, said sleeve comprising a first opening placed around the one of the at least one air inlet or the one of the at least one air outlet and a second opening opposite thereof;
- a helical propeller body rotatably arranged within the sleeve such that air circulating within the sleeve induces a rotation of the helical propeller body;
- wherein a rotation axis of the helical propeller body substantially corresponds to an axis of a corresponding sleeve portion;
- **characterized in that** the helical propeller body comprises at least one complete helix turn;
- wherein an outer diameter of the helical propeller body (220) is gradually increasing as seen in a direction of the air circulation from a first extremity of the helical propeller body facing the direction of the air circulation; and
- an alternator connected to the helical propeller body and configured for converting the rotation of the helical propeller body into electricity.

## Patentansprüche

1. Windenergieumwandlungssystem (1000), umfassend:
- ein Luftstromerzeugungsmittel (100), umfassend mindestens einen Lufteinlass (110) und mindestens einen Luftauslass (120);
- eine Windumwandlungsvorrichtung (200) für den mindestens einen Lufteinlass (110) oder den mindestens einen Luftauslass (120), vorzugsweise für den mindestens einen Luftauslass (120), die Windumwandlungsvorrichtung (200) umfassend:
- eine Hülse (210), die zum Angeordnetwerden über einem des mindestens einen Lufteinlasses (110) oder einem des mindestens einen Luftauslasses (120) konfiguriert ist, die Hülse (210) umfassend eine erste Öffnung (211), die um den einen des mindestens einen Lufteinlasses (110) oder den einen des mindestens einen Luftauslasses (120) herum platziert ist, und eine zweite Öffnung (212) gegenüber davon;
- einen spiralförmigen Propellerkörper (220), der innerhalb der Hülse (210) derart rotierbar angeordnet ist, dass Luft, die innerhalb der Hülse (210) zirkuliert, eine Rotation des spiralförmigen Propellerkörpers (220) bewirkt;
- wobei eine Rotationsachse des spiralförmigen Propellerkörpers (220) im Wesentlichen einer Achse eines entsprechenden Hülsenabschnitts (210a) entspricht;
- **dadurch gekennzeichnet, dass**
der spiralförmige Propellerkörper (220) mindestens eine vollständige Spiralwindung umfasst;
- wobei ein Außendurchmesser des spiralförmigen Propellerkörpers (220) wie in eine Richtung der Luftzirkulation von einem ersten Ende des spiralförmigen Propellerkörpers gesehen, das in die Richtung der Luftzirkulation weist, allmählich zunimmt; und
- einen Wechselstromgenerator (230), der mit dem spiralförmigen Propellerkörper (220) verbunden ist und zum Umwandeln der Rotation des spiralförmigen Propellerkörpers in Elektrizität konfiguriert ist.

2. System nach Anspruch 1, wobei ein Außendurchmesser des spiralförmigen Propellerkörpers (220) wie in die Richtung der Luftzirkulation zu einem zweiten Ende des spiralförmigen Propellerkörpers gesehen, das dem ersten Ende gegenüberliegt, allmählich abnimmt.

3. System nach Anspruch 1 oder 2, wobei ein Außendurchmesser von mindestens einem Abschnitt des spiralförmigen Propellerkörpers (220) weitgehend einem Innendurchmesser eines entsprechenden Abschnitts der Hülse (210) entspricht.

4. System nach einem der vorstehenden Ansprüche, wobei die Hülse (210) einen im Wesentlichen konischen Abschnitt (210b) aufweist, der zum Leiten der Luftzirkulation zu dem spiralförmigen Propellerkörper (220) konfiguriert ist.

5. System nach einem der vorstehenden Ansprüche, wobei die Windumwandlungsvorrichtung (200) ferner eine Welle (240) umfasst, die innerhalb der Hülse (210) rotierbar angeordnet und mit dem Wechselstromgenerator (230) verbunden ist, und wobei der spiralförmige Propellerkörper (220) um die Welle (240) herum befestigt ist.

6. System nach Anspruch 5, wobei die Windumwandlungsvorrichtung (200) ferner eine Nabe (235) umfasst, die zum lösbaren Verbinden der Welle (240) mit dem Wechselstromgenerator (230) konfiguriert ist.

7. System nach Anspruch 6, wobei die Windumwandlungsvorrichtung (200) ferner ein mechanisches Energiespeichermittel (231) umfasst, das zwischen der Nabe (235) und dem Wechselstromgenerator (240) bereitgestellt ist.

8. System nach Anspruch 7, wobei die mechanische Energiespeichereinrichtung (231) ein Schwungrad, vorzugsweise ein Schwungrad mit variabler Trägheit, umfasst, das auf einer Rotationsachse (232) zwischen der Nabe (235) und dem Wechselstromgenerator (240) angeordnet ist.

9. System nach einem der vorstehenden Ansprüche, wobei der Hülsenabschnitt (210a), der dem spiralförmigen Propellerkörper (220) entspricht, durch einen im Wesentlichen kreisförmigen Innenquerschnitt definiert ist.

10. System nach einem der vorstehenden Ansprüche, wobei der spiralförmige Propellerkörper (220) mindestens drei vollständige Spiralwindungen, vorzugsweise mindestens fünf vollständige Spiralwindungen umfasst.

11. System nach einem der vorstehenden Ansprüche, wobei der spiralförmige Propellerkörper (220) aus Kunststoff oder Metall, vorzugsweise Aluminium, hergestellt ist.

12. System nach einem der vorstehenden Ansprüche, ferner umfassend ein Elektrizitätsspeichermittel (300), und wobei der Wechselstromgenerator (230) mit dem Elektrizitätsspeichermittel (300) zum Speichern der umgewandelten Elektrizität verbunden ist.

13. System nach einem der vorstehenden Ansprüche, wobei die Luftstromerzeugungseinrichtung (100) mindestens eines umfasst von: einer Klimaanlage, einem Ventilator, einer Luftabsaugeinheit, einer Luftkompressionseinheit, einer Luftkühleinheit.

14. System nach einem der vorstehenden Ansprüche, wobei der mindestens eine Lufteinlass mindestens zwei Lufteinlässe umfasst oder der mindestens eine Luftauslass mindestens zwei Luftauslässe umfasst, und wobei die Hülse (210) zum Angeordnetwerden über mehr als einem des mindestens einen Lufteinlasses (110) oder des mindestens einen Luftauslasses (120) konfiguriert ist.

15. System nach einem der vorstehenden Ansprüche, wobei eine Steigung des spiralförmigen Propellerkörpers (220) wie in eine Richtung der Luftzirkulation gesehen allmählich zunimmt.

16. System nach einem der vorstehenden Ansprüche, wobei der spiralförmige Propellerkörper (220) mindestens zwei ineinander verschlungene Spiralen umfasst.

17. Windumwandlungsvorrichtung für mindestens eines von einem Lufteinlass oder mindestens einem Luftauslass, vorzugsweise für den mindestens einen Luftauslass, umfassend:
- eine Hülse, die zum Angeordnetwerden über einem des mindestens einen Lufteinlasses oder einem des mindestens einen Luftauslasses konfiguriert ist, die Hülse umfassend eine erste Öffnung, die um den einen des mindestens einen Lufteinlasses oder den einen des mindestens einen Luftauslasses herum platziert ist, und eine zweite Öffnung gegenüber davon;
- einen spiralförmigen Propellerkörper, der innerhalb der Hülse derart rotierbar angeordnet ist, dass innerhalb der Hülse zirkulierende Luft eine Rotation des spiralförmigen Propellerkörpers bewirkt;
- wobei eine Rotationsachse des spiralförmigen Propellerkörpers im Wesentlichen einer Achse eines entsprechenden Hülsenabschnitts entspricht;
- **dadurch gekennzeichnet, dass**
der spiralförmige Propellerkörper mindestens eine vollständige Spiralwindung umfasst;
- wobei ein Außendurchmesser des spiralförmigen Propellerkörpers (220) wie in eine Richtung der Luftzirkulation von einem ersten Ende des spiralförmigen Propellerkörpers gesehen, das in die Richtung der Luftzirkulation weist, allmählich zunimmt; und
- einen Wechselstromgenerator, der mit dem Propellerkörper verbunden ist und die Rotation des Propellerkörpers in Elektrizität umwandelt.

## Revendications

1. Système de conversion d'énergie éolienne (1000), comprenant :
- un moyen de génération de flux d'air (100) comprenant au moins une entrée d'air (110) et au moins une sortie d'air (120) ;
- un appareil de conversion de vent (200) pour l'au moins une entrée d'air (110) ou l'au moins une sortie d'air (120), de préférence pour l'au moins une sortie d'air (120), ledit appareil de conversion de vent (200) comprenant :
- un manchon (210) conçu pour être agencé sur l'une de l'au moins une entrée d'air (110) ou l'une de l'au moins une sortie d'air (120), ledit manchon (210) comprenant une première ouverture (211) placée autour de l'une de l'au moins une entrée d'air (110) ou l'une de l'au moins une sortie d'air (120) et une seconde ouverture (212) à l'opposé de celle-ci ;
- un corps de propulseur hélicoïdal (220) agencé de manière rotative au sein du manchon (210) de telle sorte que l'air circulant au sein du manchon (210) induit une rotation du corps de propulseur hélicoïdal (220) ;
- dans lequel un axe de rotation du corps de propulseur hélicoïdal (220) correspond sensiblement à un axe d'une partie de manchon (210a) correspondante ;
- **caractérisé en ce que**
le corps de propulseur hélicoïdal (220) comprend au moins un tour d'hélice complet ;
- dans lequel un diamètre externe du corps de propulseur hélicoïdal (220) augmente progressivement comme observé dans une direction de la circulation d'air à partir d'une première extrémité du corps de propulseur hélicoïdal faisant face vers la direction de la circulation d'air ; et
- un alternateur (230) relié au corps de propulseur hélicoïdal (220) et conçu pour convertir la rotation du corps de propulseur hélicoïdal en électricité.

2. Système selon la revendication 1, dans lequel un diamètre externe du corps de propulseur hélicoïdal (220) diminue progressivement comme observé dans la direction de la circulation d'air vers une seconde extrémité du corps de propulseur hélicoïdal à l'opposé de la première extrémité.

3. Système selon la revendication 1 ou 2, dans lequel un diamètre externe d'au moins une partie du corps de propulseur hélicoïdal (220) concorde étroitement avec un diamètre interne d'une partie correspondante du manchon (210).

4. Système selon l'une quelconque des revendications précédentes, dans lequel le manchon (210) comprend une partie sensiblement conique (210b) conçue pour canaliser la circulation d'air vers le corps de propulseur hélicoïdal (220).

5. Système selon l'une quelconque des revendications précédentes, dans lequel l'appareil de conversion de vent (200) comprend en outre un arbre (240) agencé de manière rotative au sein du manchon (210) et relié à l'alternateur (230), et dans lequel le corps de propulseur hélicoïdal (220) est fixé autour de l'arbre (240).

6. Système selon la revendication 5, dans lequel l'appareil de conversion de vent (200) comprend en outre un moyeu (235) conçu pour relier de manière amovible l'arbre (240) à l'alternateur (230).

7. Système selon la revendication 6, dans lequel l'appareil de conversion de vent (200) comprend en outre un moyen de stockage d'énergie mécanique (231) fourni entre le moyeu (235) et l'alternateur (240).

8. Système selon la revendication 7, dans lequel le moyen de stockage d'énergie mécanique (231) comprend un volant, de préférence un volant d'inertie variable, agencé sur un axe de rotation (232) entre le moyeu (235) et l'alternateur (240).

9. Système selon l'une quelconque des revendications précédentes, dans lequel la partie de manchon (210a) correspondant au corps de propulseur hélicoïdal (220) est définie par une section transversale interne sensiblement circulaire.

10. Système selon l'une quelconque des revendications précédentes, dans lequel le corps de propulseur hélicoïdal (220) comprend au moins trois tours d'hélice complets, de préférence au moins cinq tours d'hélice complets.

11. Système selon l'une quelconque des revendications précédentes, dans lequel le corps de propulseur hélicoïdal (220) est constitué de plastique ou de métal, de préférence d'aluminium.

12. Système selon l'une quelconque des revendications précédentes, comprenant en outre un moyen de stockage d'électricité (300), et dans lequel l'alternateur (230) est relié au moyen de stockage d'électricité (300) pour stocker l'électricité convertie.

13. Système selon l'une quelconque des revendications précédentes, dans lequel le moyen de génération de flux d'air (100) comprend au moins l'un parmi : une unité de climatisation, un ventilateur, une unité d'extraction d'air, une unité de compression d'air, une unité de réfrigération d'air.

14. Système selon l'une quelconque des revendications précédentes, dans lequel l'au moins une entrée d'air comprend au moins deux entrées d'air ou l'au moins une sortie d'air comprend au moins deux sorties d'air, et dans lequel le manchon (210) est conçu pour être agencé sur plus d'une de l'au moins une entrée d'air (110) ou de l'au moins une sortie d'air (120).

15. Système selon l'une quelconque des revendications précédentes, dans lequel un pas du corps de propulseur hélicoïdal (220) augmente progressivement comme observé dans une direction de la circulation d'air.

16. Système selon l'une quelconque des revendications précédentes, dans lequel le corps de propulseur hélicoïdal (220) comprend au moins deux hélices entrelacées.

17. Appareil de conversion de vent pour au moins l'une parmi une entrée d'air ou au moins une sortie d'air, de préférence pour l'au moins une sortie d'air, comprenant :
- un manchon conçu pour être agencé sur l'une de l'au moins une entrée d'air ou l'une de l'au moins une sortie d'air, ledit manchon comprenant une première ouverture placée autour de l'une de l'au moins une entrée d'air ou de l'une de l'au moins une sortie d'air et une seconde ouverture à l'opposé de celle-ci ;
- un corps de propulseur hélicoïdal agencé de manière rotative au sein du manchon de telle sorte que l'air circulant au sein du manchon induit une rotation du corps de propulseur hélicoïdal ;
- dans lequel un axe de rotation du corps de propulseur hélicoïdal correspond sensiblement à un axe d'une partie de manchon correspondante ;
- **caractérisé en ce que**
le corps de propulseur hélicoïdal comprend au moins un tour d'hélice complet ;
- dans lequel un diamètre externe du corps de propulseur hélicoïdal (220) augmente progressivement comme observé dans une direction de la circulation d'air à partir d'une première extrémité du corps de propulseur hélicoïdal faisant face vers la direction de la circulation d'air ; et
- un alternateur relié au corps de propulseur hélicoïdal et conçu pour convertir la rotation du corps de propulseur hélicoïdal en électricité.
